# EUROPÄISCHE PATENTSCHRIFT

(11) **EP 1 880 521 B1**
(45) Veröffentlichungstag und Bekanntmachung des Hinweises auf die Patenterteilung: **24.06.2009**
(21) Anmeldenummer: 06754876.8
(22) Anmeldetag: 27.04.2006
(51) Int. Cl.: H04L 12/56

(54) **ROUTING-VERFAHREN ZU OPTIMIERUNG DER LINKAUSLASTUNG UND STEIGERUNG DER VERFÜGBARKEIT**
ROUTING METHOD FOR OPTIMISING LINK CAPACITY AND INCREASING AVAILABILITY
PROCEDE D'ACHEMINEMENT POUR L'OPTIMISATION DE LA CHARGE DE LIAISON ET L'AUGMENTATION DE LA DISPONIBILITE

(30) Priorität: 02.05.2005 EP 05103620
(43) Veröffentlichungstag der Anmeldung: 23.01.2008
(73) Patentinhaber: Nokia Siemens Networks GmbH & Co. KG, 81541 München (DE)
(72) Erfinder: CHARZINSKI, Joachim, 81825 München (DE); REICHERT, Christoph, Verstorben (DE)
(86) Internationale Anmeldenummer: PCT/EP2006/061865
(87) Internationale Veröffentlichungsnummer: WO 2006/117319

(56) Entgegenhaltungen:
- US-A1- 2005 041 636
- US-B1- 6 560 230
- INA MINEI: "MPLS DiffServ-aware Traffic Engineering" JUNIPER NETWORKS, INC., [Online] 2004, Seiten 1-24, XP002374977 CA, USA Gefunden im Internet: URL:http://www.juniper.net/solutions/liter ature/white_papers/200048.pdf> [gefunden am 2006-06-30]
- G SCHOLLMEIER, J CHARZINSKI, A KIRSTADTER: "Improving the resilience in IP networks" PROC. IEEE HPSR, [Online] Juni 2003 (2003-06), Seiten 91-96, XP002374978 Torino, Italy Gefunden im Internet: URL:http://www.jcho.de/jc/Pubs/hpsr2003-ie ee.pdf> [gefunden am 2006-03-30]

## Beschreibung

Die Erfindung betrifft ein Routing-Verfahren zur Optimierung der Linkauslastung und Steigerung der Verfügbarkeit in einem Knoten und Links umfassenden, paketbasierten Kommunikationsnetz.

Ein Kommunikationsnetz ist definitionsgemäß eine Ressource, welche voneinander entfernte Netzknoten umfasst, die über Leitungen oder so genannte Links miteinander verbunden sind. Ein Netzknoten oder auch Knoten ist dabei eine Station im Kommunikationsnetz, an der zumindest zwei oder mehrere Links zusammenlaufen. Zusätzlich können diese Knoten auch Zugangspunkte zum Kommunikationsnetz sein und so als Datenquelle oder Ziel für Daten dienen. Die Übertragung von Daten von einer Datenquelle zu einem Zielknoten für Daten in einem Kommunikationsnetz wird als Datenverkehr bezeichnet. Als Link wird die meist dauerhafte Verbindung zwischen zwei Netzknoten bezeichnet. Über diese Links werden die Daten zwischen den Knoten transportiert.

Bei einem aus Knoten und Links aufgebauten Kommunikationsnetz werden zwei Arten aufgrund der Vermittlungstechnik unterschieden: leitungsvermittelte und paketbasierte Kommunikationsnetze.

Beim leitungsvermittelten Kommunikationsnetz wie beispielsweise Telekommunikationsnetzen ist für die gesamte Dauer eines Datentransports ein durchgehender Kanal geschaltet.

Beim paketbasierten Kommunikationsnetz wie beispielsweise X.25-Netzen oder dem Internet wird einer Verbindung für den Datenverkehr kein permanenter, durchgehender, physikalischer Kanal zur Verfügung gestellt, sondern die Daten in kleine, einzelne und manchmal auch verschieden lange Pakete aufgeteilt. Dabei werden in diese Pakete Zusatzinformationen zur Identifikation von Datenquellen und Ziel verpackt. Die Zusatzinformationen dieser Pakete werden dann von den Netzknoten, die sie durchlaufen, analysiert und die Pakete vom jeweiligen Netzknoten bis zum Ziel weitergeleitet. Die Analyse dieser Zusatzinformationen in den einzelnen Netzknoten und das entsprechende Weiterleiten der einzelnen Pakete wird auch als Routing bzw. als Routing-Methode bezeichnet. Ein Netzknoten, in dem eine solche Routing-Methode implementiert ist, wird auch Router genannt.

In herkömmlichen paketbasierten Kommunikationsnetzen wie beispielsweise dem Internet wird beim Routing üblicherweise mit Hilfe einer so genannten Metrik ein optimaler Pfad für das Übertragen der Datenpakete - also den Datenverkehr - ermittelt. Unter Metrik werden dabei feste Routingkriterien verstanden, für die in den einzelnen Netzknoten Informationen zu den Pfaden hinterlegt sind. Diese Informationen werden laufend den ermittelten Pfade angepasst, wobei benachbarte Netzknoten über die bei den anderen benachbarten Netzknoten vorhandenen Links und deren Status informiert werden.

In einem Knoten ist dann üblicherweise in einer so genannten Routingtabelle für ein bestimmtes Ziel, das durch eine Zieladresse des Paketes gegeben ist, eine Adresse für den Knoten hinterlegt. Von einem Netzknoten, der ein Datenpaket erhält, wird dann die im Paket integrierte Zieladressinformation ausgewertet, die Adresse des zugehörigen nächsten Netzknoten anhand der Routingtabelle bestimmt und das Paket an diesen Knoten entsprechen der Metrik über einen Link weitergeleitet. Auf diese Weise werden die Pakete sozusagen von Knoten zu Knoten durch das Kommunikationsnetz von der Datenquelle bis zum Ziel vermittelt, wobei die Links zwischen den Knoten entsprechend der Anzahl der Datenpakete, die über sie übertragen werden, ausgelastet sind.

Große paketbasierte Kommunikationsnetze wie beispielsweise das Internet sind oft in Teilbereiche unterteilt, die wieder paketbasierte Kommunikationsnetze sind. Im Internet, von dem als Basisprotokoll das Internetprotokoll und auch das Transmission Control Protokoll eingesetzt wird, können durch ein spezielles System einzelne, streng abgegrenzte adressierbare Bereiche definiert werden. Ein solcher Bereich wird als Domain bezeichnet und kann gezielt adressiert werden. Wird nun ein Datenpaket innerhalb eines so definierten Bereiches - also innerhalb einer Domain - von Knoten zu Knoten durch die Domain von der Datenquelle bis zum Ziel, welches innerhalb oder an den Grenzen der Domain liegen kann, vermittelt, so wird dies auch als Intra-Domain-Routing bezeichnet.

Meist werden paketbasierte Teilnetze bzw. Domains von so genannten Netzbetreibern betrieben, die einerseits daran interessiert sind, den gesamten Datenverkehr in ihrem Kommunikationsnetz so zu verteilen, dass die Kapazitäten der Verbindungen zwischen den Knoten, also der Links, optimal ausgelastet sind. Andererseits ist es für die Netzbetreiber wichtig, dass trotz Fehlern auf einzelnen Links eine hohe Verfügbarkeit ihres Kommunikationsnetzes und seiner Dienste besteht.

Das Dokument US-B1-6 560 230 (LI RENWEI ET AL), 6 Mai 2003 (2003-05-06) beschreibt eine Methode und eine Vorrichtung für eine Zeitplanung der Weiterleitung von Datenpaketen. Dabei wird in einem Knoten bestimmt in welcher Reihenfolge die ankommenden Datenpakete weitergeleitet werden. Zu diesem Zweck werden die ankommenden Datenpakete nach bestimmten Regeln und Konditionen klassifiziert sowie sortiert. Dann wird die Klassifikation der Datenpakete an einen so genannten Scheduler weitergeleitet, welcher dann das zeitliche Absenden bzw. die zeitliche Reihenfolge des Absendens der Datenpakete über ein so genanntes Output-Port des Knotens entsprechend bestimmt.

Die wesentlichen Routing-Methoden für Intra-Domain-Routing in paketbasierten Netzen wie beispielsweise dem Internet arbeiten auf Basis von Metriken, nach denen der kürzeste Pfad mit der geringsten Kostensumme für die Übertragung von Datenpaketen gesucht wird. Eine derartige aus dem Stand der Technik bekannte Routing-Methode ist beispielsweise das Open-Shortest-Path-First-(OSPF)-Protokoll Version 2, von dem neben dem Routing auch die Aufbereitung und Weiterleitung der Routing-Informationen durchgeführt wird. Eine detaillierte Beschreibung des OSPF-Protokolls ist auch in der Schrift J.Moy, "OSPF Version 2", RFC 2328 unter http://www.ietf.org/rfc/rfc2328.txt zu finden, die von der Internet Engineering Task Force (IETF) publiziert wurde.

Eine weitere aus dem Stand der Technik bekannte Intra-Domain-Routing-Methode in paketbasierten Kommunikationsnetzen stellt das Intermediate-System-Intermediate-System-(IS-IS)-Protokoll dar, das in der von der Internet Engineering Task Force (IETF) veröffentlichten Schrift R.Callon, "Use of OSI IS-IS for Routing in TCP/IP and Dual Environment", RFC 1195 unter http://www.ietf.org/rfc/rfc1195.txt definiert worden ist und Ähnlichkeiten mit dem OSPF-Protokoll hat.

Bei beiden Protokollen - dem OSPF- und dem IS-IS-Protokoll - werden im Fall von Fehlern bei einem Link oder einem Knoten die Nachbarn des ausgefallenen Elementes die anderen Knoten im Kommunikationsnetz benachrichtigt, worauf dann von jedem Knoten der kürzeste Pfad für den Datenverkehr wieder neu berechnet werden muss. Die Auswahl des Pfades ist durch die Topologie des Kommunikationsnetzes und durch die verwendete Metrik bestimmt. Die Metrik wird bei den erwähnten Routing-Protokollen meist so gewählt, dass der Datenverkehr annähernd optimal auf die Links verteilt und damit eine optimale Linkauslastung erreicht wird. Beide Routing-Methoden weisen aber den Nachteil auf, dass bei einem Fehler erst die Information über einen Ausfall im ganzen Netz verteilt und anschließend netzweit ein neuer, kürzester Pfad ermittelt werden muss, wodurch die Verfügbarkeit aufgrund der Ausbreitungszeiten für die Fehlerbenachrichtigung geringer wird. In Kommunikationsnetzen mit nicht allzu langen Ausbreitungszeiten kann zwar eine für viele Anwendungen tolerierbare Fehlerreaktionszeit - und damit Einschränkung in der Verfügbarkeit - mit z.B. OPSF-Routing in Kombination mit beschleunigter Fehlererkennung und beschleunigten Algorithmen zur Pfadsuche erreicht werden. Diese Fehlerreaktionszeiten reichen allerdings nicht für Anwendungen mit extrem hohen Verfügbarkeits- und Echtzeitanforderungen wie beispielsweise telemedizinische Operationen, Roboterfernsteuerungen, etc. oder für Kommunikationsnetze mit extrem langen Linklaufzeiten wie z.B. Satellitenstrecken aus.

Daher wurde im Rahmen des Key Components for the mobile Internet of Next Generation-(KING)-Projektes eine Routing-Methode mit hoher Zuverlässigkeit für Intra-Domain-Routing in paketbasierten Netzen entwickelt, von welcher im Fehlerfall ein Alternativpfad geboten wird. Vom so genannten Outdegree2-(O2)-Routing, welches in der Schrift: G. Schollmeier, J. Charzinski et al, "Improving the Resilience in IP Networks" für den High Performance Switching and Routing (HPSR) Workshop 2003 im Juni 2003 in Turin, Italien beschrieben wird, werden jedem Knoten in einem Kommunikationsnetz zwei nächste Knoten für jedes Datenziel zugeordnet. Im Fehlerfall ist daher immer noch ein Weg für die Übertragung von Datenpaketen zum Datenziel vorhanden, so dass durch diesen Ansatz eine maximale Zuverlässigkeit bei kürzestmöglicher Reaktionszeit erzielt wird. Durch Untersuchungen im Rahmen des KING-Projektes wurde allerdings festgestellt, dass durch O2-Routing-Methode wegen der teils nötigen Umwege in den Datenübertragungspfaden eine schlechtere, da höhere, Linkauslastung erreicht wird. Mit O2-Routing-Methode wird somit zwar eine sehr hohe Verfügbarkeit erzielt, sie weist aber den Nachteil einer schlechteren Linkauslastung auf.

Der vorliegenden Erfindung liegt daher die Aufgabe zugrunde, ein Routing-Verfahren anzugeben, durch welches sowohl eine optimale Linkauslastung wie auch eine hohe Verfügbarkeit für den Datenverkehr erzielt werden.

Die Lösung der Aufgabe erfolgt erfindungsgemäß mit einem Routing-Verfahren zur Optimierung der Linkauslastung und Steigerung der Verfügbarkeit in einem Knoten und Links umfassenden, paketbasierten Kommunikationsnetz, nach Anspruch 1.

Die mit der Erfindung erzielten Vorteile bestehen insbesondere darin, dass sowohl eine optimale Linkauslastung als auch eine hohe Zuverlässigkeit und rasche Fehlerreaktion für den entsprechenden Datenverkehr gleichzeitig erreicht werden können. Es wird ermöglicht, dass jener Datenverkehr, dem einen hohe Prioritätsstufe zugeordnet worden ist, wie beispielsweise Datenverkehr mit Echzeitanforderungen, zuerst im Kommunikationsnetz weitergeleitet wird, und dann erst der Datenverkehr mit einer niedrigen Prioritätsstufe auf die Links verteilt wird.

Des weiteren empfiehlt sich zum Routen des Datenverkehrs mit hoher Prioritätsstufe eine an sich bekannte Outdegree2-Routing-Methode anzuwenden, weil dieses bekannte Routing-Verfahren maximale Zuverlässigkeit bei kürzestmöglicher Reaktionszeit für den Datenverkehr mit hoher Prioritätsstufe bietet.

In weiterer Ausgestaltung der Erfindung ist es vorteilhaft, wenn zum Routen des Datenverkehrs mit niedriger Prioritätsstufe an sich bekannte Routing-Methoden für Intra-Domain-Routing angewendet werden, da durch diese bekannten Routing-Methoden meist der kürzeste Pfad entsprechend der jeweiligen Metrik für die Datenübertragung ermittelt wird. Durch diese Pfadbestimmung wird daher eine optimale Linkauslastung für den Datenverkehr mit niedriger Prioritätsstufe erzielt. Vor allem wird auch erreicht, dass der Datenverkehr mit niedriger Prioritätsstufe auf Links gelegt wird, die wenig durch Datenverkehr mit hoher Prioritätsstufe belastet werden.

Besonders günstig ist es, wenn zum Routen des Datenverkehrs mit niedriger Prioritätsstufe als Intra-Domain-Routing-Protokoll das an sich bekannte Open Shortest Path First-Protokoll eingesetzt wird, denn dieses Protokoll ist als Version 2 im Request for Comments (RFC) 2328 der Internet Engineering Task Force (IETF) definiert und wird von verschiedenen Herstellern von Routern eingesetzt.

Vorteilhaft ist es auch, wenn zum Routen des Datenverkehrs mit niedriger Prioritätsstufe als Intra-Domain-Routing-Protokoll das an sich bekannte Intermediate-System-Intermediate-System-Protokoll eingesetzt wird. Dieses Routing-Protokoll wird durch den Request for Comments (RFC) 1195 der Internet Engineering Task Force (IETF) definiert und wird heute häufig als Interior Gateway Protocol - das bedeutet zum netzinternen Routing - und zur Lastverteilung und von Betreibern großer IP-Netze eingesetzt.

Vorgeschlagen wird, dass als Kriterium für die Zuordnung des zu routenden Datenverkehrs zu einer von zumindest zwei Prioritätsstufen die jeweiligen Zuverlässigkeitsanforderungen herangezogen werden. Dadurch wird erreicht, dass in Kommunikationsnetzen sowohl traditionelle Internet-Dienste wie z.B. World Wide Web, E-mail, etc., für die eine niedrigere Zuverlässigkeit notwendig ist, und auch hochverfügbare Echtzeit-Dienste angeboten und mit differenzierten Routing-Methoden bearbeitet werden können.

Günstig ist es auch, wenn als Kriterium für die Zuordnung des zu routenden Datenverkehrs zu einer von zumindest zwei Prioritätsstufen die jeweiligen Quality-of-Service-Anforderungen herangezogen werden. Durch Heranziehen der Quality-of-Service-Anforderungen werden auch weitere Faktoren zur Bestimmung der Güte bzw. Qualität eines Dienstes, der in einem Kommunikationsnetz angeboten wird, für die Zuordnung des zu routenden Datenverkehrs zu einer Prioritätsstufe herangezogen. Das ist besonders wichtig, denn Quality-of-Service kann für verschiedene Dienste innerhalb eines Kommunikationsnetzes unterschiedlich definiert sein.

Eine bevorzugte Weiterbildung der Erfindung sieht auch vor, dass als Basisprotokoll für den Datenverkehr im paketbasierten Kommunikationsnetz das Internetprotokoll eingesetzt wird, da das Internetprotokoll vom genutzten Medium unabhängig ist und daher gleichermaßen bei lokalen paketbasierten Kommunikationsnetzen - so genannte Local Area Networks - als auch bei überregionalen paketbasierten Kommunikationsnetzen - so genannte Wide Area Networks - eingesetzt werden kann.

Vorteilhaft ist es auch, wenn für die Routing-Methode zum Routen des Datenverkehrs mit hoher Prioritätsstufe eine an sich bekannte Optimierung der Lastverteilung durchgeführt wird, wodurch die Zuverlässigkeit und die Schnelligkeit des Datenverkehrs gesteigert wird.

Günstig ist es auch, wenn für die Routing-Methode zum Routen des Datenverkehrs mit niedriger Prioritätsstufe eine an sich bekannte Optimierung der Lastverteilung durchgeführt wird, wodurch die Zuverlässigkeit und die Schnelligkeit des Datenverkehrs gesteigert wird.

Vorzugsweise wird für die Optimierung der Lastverteilung eine Optimierung der Linkkostenmetriken herangezogen, da durch diese nicht nur kurze, sondern auch zu schnelle und kostengünstige Pfade ermittelt werden.

Eine bevorzugte Weiterbildung der Erfindung sieht auch vor, dass zuerst die Optimierung für das Routen des Datenverkehrs mit hoher Prioritätsstufe durchgeführt wird, anschließend eine verbleibende Restkapazität berechnet und für diese das Routen des Datenverkehrs mit niedriger Prioritätsstufe durchgeführt wird, weil damit eine optimale Linkauslastung, eine hohe Zuverlässigkeit und eine schnelle Fehlerreaktion für Datenverkehr unterschiedlicher Prioritätsstufen erreicht werden kann.

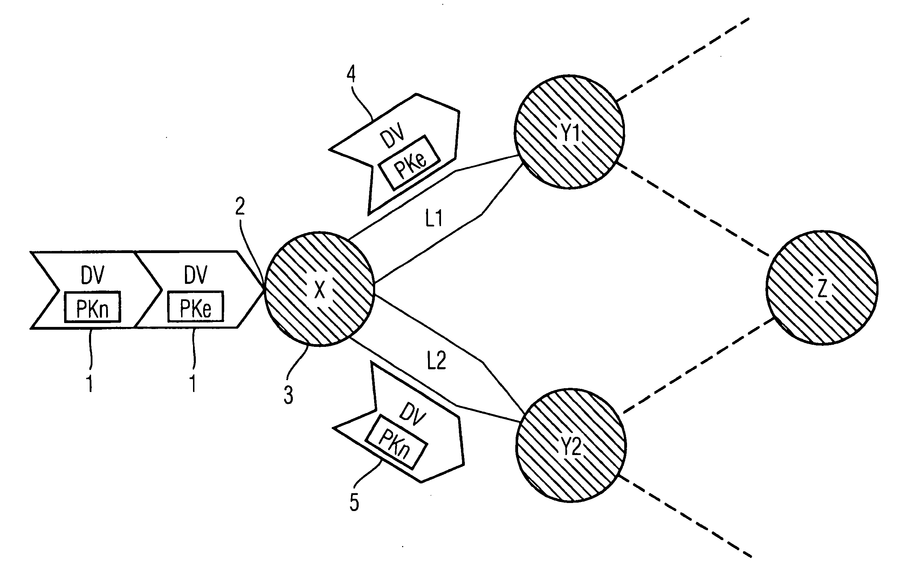

Die Erfindung wird nachfolgend in beispielhafter Weise unter Bezugnahme auf die beigefügte Figur 1 näher erläutert. Figur 1 zeigt dabei den schematischen Ablauf des erfindungsgemäßen Verfahrens.

In der Figur sind vier Knoten X, Y1, Y2 und Z eines Kommunikationsnetzes dargestellt, wobei vom Zielknoten Z das Ziel für die Übertragung des Datenverkehrs innerhalb des Kommunikationsnetzes gebildet wird. Die weiteren Knoten X, Y1, Y2 sind über Links L1, L2 derart verbunden, dass der erste Link L1 vom ersten Knoten X zum weiteren Knoten Y1 und der zweite Link L2 vom ersten Knoten X zum weiteren Knoten Y2 weiterführt.

In einem ersten Schritt 1 wird der zu routende Datenverkehr DV entsprechend seiner Anforderung an die Zuverlässigkeit markiert und damit einer Prioritätsstufe PKn, PKe zugeordnet. Durch die niedrigere Prioritätsstufe PKn wird dabei der Datenverkehr DV mit normalen Zuverlässigkeitsanforderungen gekennzeichnet. Mit der höheren Prioritätsstufe PKe wird der Datenverkehr DV mit hohen Zuverlässigkeitsanforderungen markiert.

Gelangt nun in einem zweiten Schritt 2 der durch eine Prioritätsstufe PKn, PKe gekennzeichnete Datenverkehr DV zum ersten Knoten X des Kommunikationsnetzes, so wird vom ersten Knoten X in einem dritten Schritt 3 die Prioritätsstufe PKn, PKe des Datenverkehrs DV ausgewertet. Im ersten Knoten X - wie auch in allen weiteren Knoten Y1, Y2 des Kommunikationsnetzes - sind zwei Routing-Einträge pro Zielknoten Z hinterlegt. Von dem einen Routing-Eintrag wird der Wege für das Routing des mit der niedrigeren Prioritätsstufe PKn gekennzeichneten Datenverkehrs DV mit normalen Zuverlässigkeitsanforderungen zum Zielknoten Z definiert, wobei der kürzeste Pfad für diesen Datenverkehr DV auf Basis einer optimierten Metrik bestimmt wird. Vom anderen Eintrag wird der Weg für den mit der höheren Prioritätsstufe PKe gekennzeichneten Datenverkehr DV mit hoher Zuverlässigkeitsanforderung zum Zielknoten Z mittels 02-Routing festgelegt.

In einem vierten Schritt 4 wird nun der Datenverkehr DV mit der hohen Zuverlässigkeitsanforderung, der durch die Prioritätsstufe PKe markiert ist, entsprechend den durch das O2-Routing festgelegten Wegen über den ersten Link L1 zum weiteren Knoten Y1 bis zum Zielknoten Z geleitet.

In einem fünften Schritt 5 wird dann der durch die Prioritätsstufe PKn gekennzeichnete Datenverkehr DV entlang den sich auf der verwendeten, optimierten Metrik ergebenden, kürzesten Wegen über den zweiten Link L2 zum weiteren Knoten Y2 bis zum Zielknoten Z übertragen.

Der Schritt 5 - die Bestimmung des Pfades auf Basis einer optimierten Metrik - kann wie beschrieben nach der Wegewahl für das O2-Routing des Datenverkehrs DV mit hohen Zuverlässigkeitsanforderungen durchgeführt werden. Es ist aber alternativ auch möglich, dass der Schritt 5 gemeinsam mit der Wegewahl für das O2-Routing vorgenommen wird.

## Patentansprüche

1. Routing-Verfahren zur Optimierung der Linkauslastung und Steigerung der Verfügbarkeit in einem Knoten (X, Y1, Y2, Z) und Links (L1, L2) umfassenden, paketbasierten Kommunikationsnetz, **dadurch gekennzeichnet, dass** der zu routende Datenverkehr (DV) einer von zumindest zwei Prioritätsstufen (PKn, PKe) zugeordnet wird, wobei als Kriterium für eine Zuordnung zu einer von zumindest zwei Prioritätsstufen Zuverlässigkeitsanforderungen und/oder Quality-of-Service-Anforderungen des zu routenden Datenverkehrs (DV) herangezogen werden,
dass zuerst der Datenverkehr (DV) mit hoher Prioritätsstufe (PKe) geroutet wird,
dass danach der Datenverkehr (DV) mit niedriger Prioritätsstufe (PKn) geroutet wird,
und dass die verwendeten an sich bekannten Routing-Methoden an die Anforderungen des jeweiligen Datenverkehrs (DV) angepasst werden.

2. Routing-Verfahren nach Anspruch 1 **dadurch gekennzeichnet, dass** zum Routen des Datenverkehrs (DV) mit hoher Prioritätsstufe (PKe) eine an sich bekannte Outdegree 2-Routing-Methode angewendet wird.

3. Routing-Verfahren nach Anspruch 1 oder 2, **dadurch gekennzeichnet, dass** zum Routen des Datenverkehrs (DV) mit niedriger Prioritätsstufe (PKn) an sich bekannte Routing-Methoden für Intra-Domain-Routing im Internet angewendet werden.

4. Routing-Verfahren nach Anspruch 3, **dadurch gekennzeichnet, dass** zum Routen des Datenverkehrs (DV) mit niedriger Prioritätsstufe (PKn) als Intra-Domain-Routing-Protokoll das an sich bekannte Open Shortest Path First-Protokoll eingesetzt wird.

5. Routing-Verfahren nach Anspruch 3, **dadurch gekennzeichnet, dass** zum Routen des Datenverkehrs (DV) mit niedriger Prioritätsstufe (PKn) als Intra-Domain-Routing-Protokoll das an sich bekannte Intermediate-System-Intermediate-System-Protokoll eingesetzt wird.

6. Routing-Verfahren nach einem der Ansprüche 1 bis 5, **dadurch gekennzeichnet, dass** als Basisprotokoll für den Datenverkehr (DV) im paketbasierten Kommunikationsnetz das Internetprotokoll eingesetzt wird.

7. Routing-Verfahren nach einem der Ansprüche 1 bis 6, **dadurch gekennzeichnet, dass** für die Routing-Methode zum Routen des Datenverkehrs (DV) mit hoher Prioritätsstufe (PKe) eine an sich bekannte Optimierung der Lastverteilung durchgeführt wird.

8. Routing-Verfahren nach einem der Ansprüche 1 bis 7, **dadurch gekennzeichnet, dass** für die Routing-Methode zum Routen des Datenverkehrs (DV) mit niedriger Prioritätsstufe (PKn) eine an sich bekannte Optimierung der Lastverteilung durchgeführt wird.

9. Routing-Verfahren nach Anspruch 8, **dadurch gekennzeichnet, dass** für die Optimierung der Lastverteilung eine Optimierung der Linkkostenmetriken herangezogen wird.

10. Routing-Verfahren nach einem der Ansprüche 1 bis 8, **dadurch gekennzeichnet, dass** zuerst die Optimierung für das Routen des Datenverkehrs (DV) mit hoher Prioritätsstufe (PKe) durchgeführt wird, dass anschließend eine verbleibende Restkapazität berechnet und dass für diese das Routen des Datenverkehrs (DV) mit niedriger Prioritätsstufe (PKn) durchgeführt wird.

## Claims

1. Routing method for optimizing link capacity and increasing availability in a packet-based communication network comprising nodes (X, Y1, Y2, Z) and links (L1, L2), **characterized in that** the data traffic (DV) to be routed is allocated to one of at least two priority levels (PKn, PKe), wherein reliability requirements and/or Quality-of-Service requirements of the data traffic (DV) to be routed are utilized as criterion for an allocation to one of at least two priority levels,
that first the data traffic (DV) having a high priority level (PKe) is routed,
that then the data traffic (DV) having a low priority level (PKn) is routed,
and that the routing methods used, known per se, are adapted to the requirements of the respective data traffic (DV).

2. Routing method according to Claim 1, **characterized in that** an Outdegree2 routing method, known per se, is used for routing the data traffic (DV) having a high priority level (PKe).

3. Routing method according to Claim 1 or 2, **characterized in that** routing methods for intra-domain routing in the Internet, known per se, are used for routing the data traffic (DV) having a low priority level (PKn).

4. Routing method according to Claim 3, **characterized in that** the Open Shortest Path First protocol, known per se, is used as intra-domain routing protocol for routing the data traffic (DV) having a low priority level (PKn).

5. Routing method according to Claim 3, **characterized in that** the Intermediate System Intermediate System protocol, known per se, is used as intra-domain routing protocol for routing the data traffic (DV) having a low priority level (PKn).

6. Routing method according to one of Claims 1 to 5, **characterized in that** the Internet Protocol is used as basic protocol for the data traffic (DV) in the packet-based communication network.

7. Routing method according to one of Claims 1 to 6, **characterized in that** an optimization of the load distribution, known per se, is carried out for the routing method for routing the data traffic (DV) having a high priority level (PKe).

8. Routing method according to one of Claims 1 to 7, **characterized in that** an optimization of the load distribution, known per se, is carried out for the routing method for routing the data traffic (DV) having a low priority level (PKn).

9. Routing method according to Claim 8, **characterized in that** an optimization of the link cost metrics is utilized for optimizing the load distribution.

10. Routing method according to one of Claims 1 to 8, **characterized in that** first the optimization for routing the data traffic (DV) having a high priority level (PKe) is carried out, that then a remaining residual capacity is calculated and that for this, the routing of the data traffic (DV) having a low priority level (PKn) is carried out.

## Revendications

1. Procédé de routage pour l'optimisation de la charge de liaison et l'augmentation de la disponibilité dans un réseau de communication basé sur les paquets, comprenant des noeuds (X, Y1, Y2, Z) et des liaisons (L1, L2), **caractérisé en ce que** le trafic de données à router (DV) est attribué à l'un d'au moins deux niveaux de priorité (PKn, PKe), des exigences de fiabilité et/ou des exigences de "Quality-of-service" du trafic de données (DV) à router étant utilisées comme critère pour une attribution à l'un d'au moins deux niveaux de priorité, **en ce que** le trafic de données (DV) avec un niveau de priorité (PKe) élevé est routé en premier, **en ce que** le trafic de données (DV) avec un faible niveau de priorité (PKn) est routé ensuite, et **en ce que** les méthodes de routage utilisées et déjà connues sont adaptées aux exigences du trafic de données (DV) concerné.

2. Procédé de routage selon la revendication 1, **caractérisé en ce qu'**une méthode de routage outdegree 2 déjà connue est appliquée pour le routage du trafic de données (DV) avec un niveau de priorité (PKe) élevé.

3. Procédé de routage selon la revendication 1 ou 2, **caractérisé en ce que** des méthodes de routage déjà connues pour le routage « intra-domain" sur Internet sont appliquées pour le routage du trafic de données (DV) avec un faible niveau de priorité (PKn).

4. Procédé de routage selon la revendication 3, **caractérisé en ce que** le protocole Open Shortest Path First déjà connu est utilisé pour le routage du trafic de données (DV) avec un faible niveau de priorité (PKn) comme protocole de routage "intra-domain".

5. Procédé de routage selon la revendication 3, **caractérisé en ce que** le protocole Intermediate-System-Intermediate-System déjà connu est utilisé comme protocole de routage "intra-domain" pour le routage du trafic de données (DV) avec un faible niveau de priorité (PKn).

6. Procédé de routage selon l'une quelconque des revendications 1 à 5, **caractérisé en ce que** le protocole Internet est utilisé comme protocole de base pour le trafic de données (DV) dans le réseau de communication basé sur les paquets.

7. Procédé de routage selon l'une quelconque des revendications 1 à 6, **caractérisé en ce qu'**une optimisation déjà connue de la répartition de charge est appliquée pour le procédé de routage pour le routage du trafic de données (DV) avec un niveau de priorité (PKe) élevé.

8. Procédé de routage selon l'une quelconque des revendications 1 à 7, **caractérisé en ce qu'**une optimisation déjà connue de la répartition de charge est appliquée pour la méthode de routage pour le routage du trafic de données (DV) avec un faible niveau de priorité (PKn).

9. Procédé de routage selon la revendication 8, **caractérisé en ce qu'**une optimisation des métriques de coûts de liaison est utilisée pour l'optimisation de la répartition de charge.

10. Procédé de routage selon l'une quelconque des revendications 1 à 8, **caractérisé en ce que** l'optimisation est appliquée en premier pour le routage du trafic de données (DV) avec un niveau de priorité (PKe) élevé, **en ce qu'**ensuite une capacité résiduelle restante est calculée et **en ce que** le routage du trafic de données (DV) avec faible niveau de priorité (PKn) est appliqué pour cette capacité.
